# FASCICULE DE BREVET EUROPEEN

(11) **EP 2 025 872 B1**
(45) Date de publication et mention de la délivrance du brevet: **05.09.2012**
(21) Numéro de dépôt: 08161085.9
(22) Date de dépôt: 24.07.2008
(51) Int. Cl.: F01D 9/04

(54) **Secteur de distributeur de turbine**
Verteilersektor einer Turbine
Turbine manifold sector

(30) Priorité: 08.08.2007 FR 0756998
(43) Date de publication de la demande: 18.02.2009
(73) Titulaire: SNECMA, 75015 Paris (FR)
(72) Inventeur: Bacha, Jean-Luc, 75013 Paris (FR); Baumas, Olivier, 77240 Vert Saint Denis (FR); Lanciaux, Lucie, 75017 Paris (FR); Lavison, Sophie, 75014 Paris (FR)
(74) Mandataire: Besnard, Christophe Laurent

(56) Documents cités:
- EP-A- 1 277 918
- EP-A- 1 526 251
- EP-A1- 1 361 337
- WO-A-01/98561

## Description

L'invention concerne un secteur de distributeur de turbine, une turbomachine équipée d'une turbine dont le distributeur résulte de l'assemblage de plusieurs secteurs de ce type, et un procédé de fabrication d'un tel secteur.

L'invention s'applique à tout type de turbine et à tout type de turbomachine, terrestre ou aéronautique. Plus particulièrement, l'invention s'applique aux turbines des turboréacteurs d'avions.

Dans la présente demande, l'amont et l'aval sont définis par rapport au sens d'écoulement normal du fluide à travers la turbine. Par ailleurs, la direction axiale correspond à la direction de l'axe de rotation du rotor de la turbine, et une direction radiale est une direction perpendiculaire à cet axe de rotation. Enfin, sauf précision contraire, les adjectifs intérieur et extérieur sont utilisés en référence à une direction radiale de sorte que la partie ou la surface intérieure (i.e. radialement intérieure) d'un élément est plus proche dudit axe de rotation que la partie ou la surface extérieure (i.e. radialement extérieure) du même élément.

Une turbine de turboréacteur d'avion comporte des éléments fixes (stator) et des éléments mobiles (rotor). Les éléments mobiles sont des roues mobiles porteuses d'aubes, ces roues mobiles étant intercalées entre des grilles d'aubes fixes, également appelées distributeur. Le couple distributeur/roue mobile constitue un étage de turbine. Pour faciliter le montage de la turbine, les distributeurs sont obtenus par assemblage d'au moins deux secteurs de distributeur. Des exemples d'aubes de distributeur ou de roue mobile sont décrits dans les documents de brevet n° EP 1277 918 A1 et EP 1361337 A1.

Compte tenu de la température des gaz traversant la turbine, les aubes de certains distributeurs sont creuses de manière à pouvoir être refroidies. C'est généralement le cas dans les turboréacteurs double-corps, des aubes du distributeur situé le plus en amont, également appelé distributeur du premier étage.

Plus précisément, l'invention concerne un secteur de distributeur de turbine, du type du document EPA1526 251, comprenant un segment de plate-forme extérieure et un segment de plate-forme intérieure entre lesquels s'étendent une ou plusieurs aubes creuses, chaque aube présentant une cavité de bord de fuite destinée à être alimentée en air de refroidissement et qui communique avec une pluralité d'évents répartis le long du bord de fuite de l'aube, ces évents permettant l'évacuation d'une partie de l'air de refroidissement.

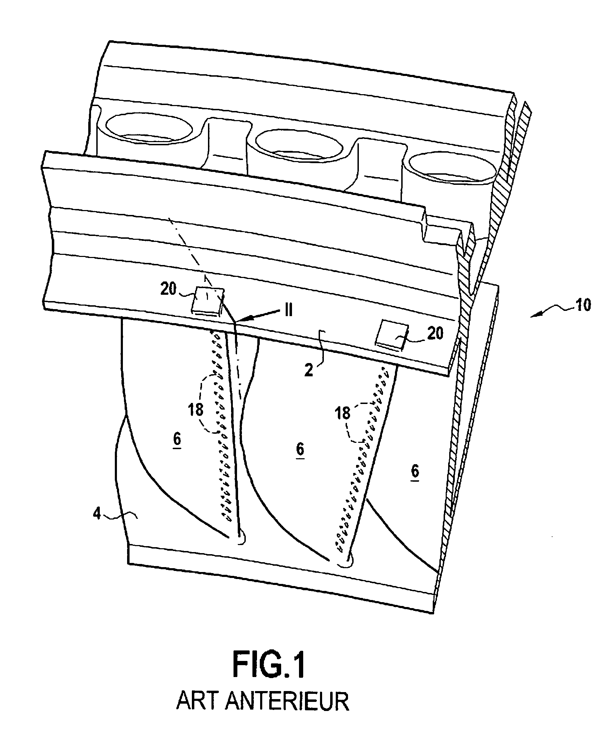

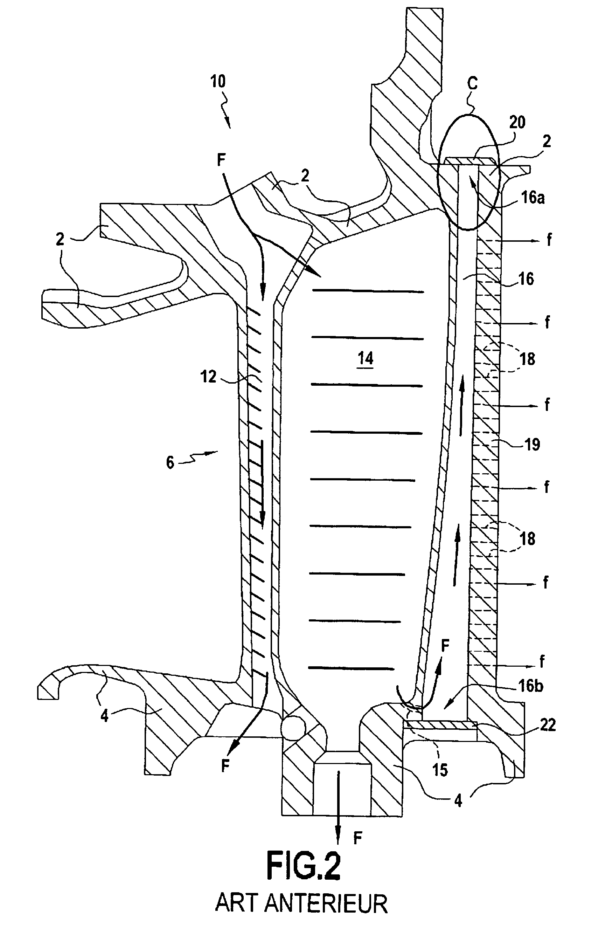

Un exemple connu de secteur du type précité est représenté sur les figures 1 et 2.

La figure 1 est une vue en perspective de cet exemple connu de secteur 10 et la figure 2 est une coupe radiale selon le plan II - II de la figure 1. Le secteur 10 comprend un segment 2 de plate-forme extérieure et un segment 4 de plate-forme intérieure, entre lesquels s'étendent des aubes 6 destinées à orienter le flux d'air dans une direction favorable à l'entraînement de la roue mobile adjacente (non représentée). Pour former un distributeur, on assemble entre eux plusieurs secteurs. Une fois assemblés, les segments 2 forment la plate-forme intérieure annulaire du distributeur, et les segments 4 forment la plate-forme extérieure annulaire du distributeur.

Les aubes 6 sont creuses de manière à pouvoir être traversées par de l'air de refroidissement. Chaque aube présente en son intérieur trois cavités (voir figure 2): une cavité de bord de fuite 16 (située du côté du bord de fuite de l'aube), une cavité de bord d'attaque 12 (située du côté du bord d'attaque de l'aube), et une cavité centrale 14 (située entre les deux cavités précitées). En fonctionnement, ces trois cavités 12, 14, 16 sont alimentées en air de refroidissement. Cet air de refroidissement est généralement prélevé dans le flux primaire du turboréacteur au niveau du compresseur haute pression. Le trajet de l'air de refroidissement est symbolisé schématiquement par les flèches F.

La cavité de bord de fuite 16 est alimentée en air de refroidissement via la cavité centrale 14 et des orifices de communication 15 (en pointillés sur la figure 2) entre ces deux cavités 14, 16. La cavité de bord de fuite 16 communique avec une pluralité d'évents 18 (i.e. des canaux de sortie) répartis le long du bord de fuite de l'aube et traversant la paroi d'intrados 19 de l'aube. Les évents 18 sont représentés en pointillés sur la figure 2. Ils permettent l'évacuation d'une partie de l'air de refroidissement, suivant les flèches f. L'air expulsé forme un film d'air le long de la paroi d'intrados 19, ce film d'air protégeant le bord de fuite de l'aube contre les gaz chauds traversant la turbine, et refroidissant ce bord de fuite.

Le secteur 10 est généralement réalisé en fonderie, les cavités 12, 14 et 16 étant ménagées en utilisant des noyaux solubles. Pour permettre l'évacuation de ces noyaux solubles, les cavités 12, 14 et 16 sont, à l'origine, ouvertes à leurs extrémités extérieure et intérieure (i.e. supérieure et inférieure sur la figure 2). Après évacuation des noyaux, les ouvertures extérieure et intérieure des cavités sont obturées.

Ainsi, l'ouverture extérieure 16a de la cavité de bord de fuite 16 et l'ouverture intérieure 16b, sont respectivement obturées par des plaques 20 et 22. En fonctionnement, il n'y a donc pas d'évacuation d'air au niveau des plaques 20, 22. La plaque 20 est réalisée à partir d'une pièce pré-frittée qui est positionnée sur la surface extérieure du segment 2 de plate-forme extérieure puis montée en température, de sorte que cette pièce pré-frittée se soude par soudage-diffusion sur le segment 2.

Pour protéger le secteur 10 contre l'oxydation et la corrosion à chaud, on dépose généralement sur ce secteur, par voie gazeuse, un revêtement protecteur en aluminium. On parle de procédé d'aluminisation. Ce procédé connu consiste généralement à déposer de l'aluminium sur certaines parties du secteur 10 (notamment les faces d'intrados et d'extrados des aubes 6) en utilisant un donneur comprenant de l'aluminium, l'aluminium étant transporté en phase gazeuse du donneur au secteur 10, sous forme d'halogénure d'aluminium. Pour former cet halogénure d'aluminium on utilise un gaz, communément appelé "gaz vecteur," capable de se sublimer sous l'effet thermique pour libérer des ions halogènes. Ces ions réagissent avec le donneur pour former un halogénure d'aluminium volatil. Cet halogénure d'aluminium peut être dilué avec un gaz réducteur ou inerte, comme l'argon.

La cavité de bord de fuite 16 est obturée par les plaques 20 et 22 avant de déposer le revêtement protecteur, car les plaques 20 et 22 ne peuvent pas être soudée sur ce revêtement. Ainsi, le gaz utilisé pour le dépôt du revêtement (i.e. l'halogénure d'aluminium volatil et le gaz inerte dans l'exemple précité) ne rentre pas ou peu à l'intérieur de la cavité de bord de fuite 16. Du gaz peut éventuellement pénétrer à l'intérieur des évents 18, mais ces évents 18 ayant une section d'ouverture de très petite taille, le gaz y pénètre en très faible quantité et sur une très faible distance. Les parois de la cavité de bord de fuite 16 ne sont donc pas recouvertes par le revêtement protecteur, ou elles le sont très légèrement au niveau des évents 18.

Plusieurs rapports d'expertise ont mis en évidence le fait que la zone C de la cavité de bord de fuite 16 située à proximité du segment de plateforme extérieure 2 et de la plaque 20, était très affectée par la corrosion à chaud. Cette zone C est entourée sur la figure 2. Or, il est très difficile de réparer cette zone C, notamment parce que la réparation nécessite le retrait de la plaque 20 soudée à la plateforme extérieure 2. Ceci se traduit par un taux de rebut élevé pour ces secteurs de distributeur connus.

L'invention a pour objectif de proposer un secteur de distributeur de turbine du type précité, dans lequel la zone de la cavité de bord de fuite située à proximité du segment de plateforme extérieure, est moins sujette à la corrosion à chaud.

Cet objectif est atteint grâce à un secteur de distributeur de turbine selon la revendication 1 annexée, dans lequel la cavité de bord de fuite communique avec un trou de sortie d'air situé au niveau de la plate-forme extérieure. Lorsque la turbine fonctionne, ce trou de sortie d'air permet l'évacuation d'une partie de l'air de refroidissement.

En fonctionnement, le trou de sortie d'air permet d'assurer une circulation d'air de refroidissement dans la zone de la cavité de bord de fuite située à proximité du segment de plateforme extérieure, de sorte que cette zone est mieux refroidie et, ainsi, moins sujette à la corrosion à chaud.

En outre, avantageusement, on effectue un dépôt, par voie gazeuse, d'un revêtement protecteur sur le secteur, de sorte qu'une partie du gaz utilisé pour le dépôt passe par le trou de sortie d'air et que les parois de la cavité situées à proximité de ce trou sont recouvertes par le revêtement protecteur. Avantageusement, le revêtement protecteur est anti-corrosion, et les parois sont encore moins sujettes à la corrosion à chaud, puisque protégées par ce revêtement. On notera que cet avantage peut être obtenu avec tout type de revêtement anti-corrosion et que l'invention ne se limite donc pas au dépôt d'un revêtement en aluminium.

Selon un mode de réalisation, pour faciliter la pénétration du gaz utilisé pour le dépôt du revêtement protecteur, le trou de sortie d'air présente une section d'ouverture de surface supérieure ou égale à 2 mm².

Selon un mode de réalisation, le trou de sortie d'air présente une section d'ouverture de surface inférieure ou égale à 8 mm². Ceci permet de limiter l'évacuation d'air de refroidissement au niveau du trou de sortie. En effet, une évacuation d'air de refroidissement trop importante au niveau du trou de sortie entraînerait, notamment, une diminution du débit d'air évacué via les évents, ce qui serait préjudiciable au refroidissement du bord de fuite des aubes.

Le trou de sortie d'air est ménagé au travers d'une pièce fixée sur le secteur de plateforme extérieure. Ainsi, la section d'ouverture du trou peut être réalisée et calibrée avant la fixation de la pièce. Cette pièce est choisie pour être facile à manipuler, de sorte que l'opération de calibrage se fait aisément et avec un bon degré de précision. Cette pièce est, par exemple, une plaque métallique et peut être fixée par brasage.

L'invention et ses avantages seront mieux compris à la lecture de la description détaillée qui suit, d'un exemple de réalisation de l'invention donné à titre illustratif et non limitatif. La description se réfère aux pages de figures annexées, sur lesquelles :
- la figure 1 est une vue en perspective, d'un exemple connu de secteur de distributeur de turbine ;
- la figure 2 est une coupe radiale, selon le plan II-II du de la figure 1;
- la figure 3 est une vue en perspective, d'un exemple de secteur de distributeur de turbine selon l'invention ;
- la figure 4 est une coupe radiale, selon le plan IV-IV de la figure 3.

Les figures 1 et 2 représentent l'art antérieur, elles ont été décrites plus haut.

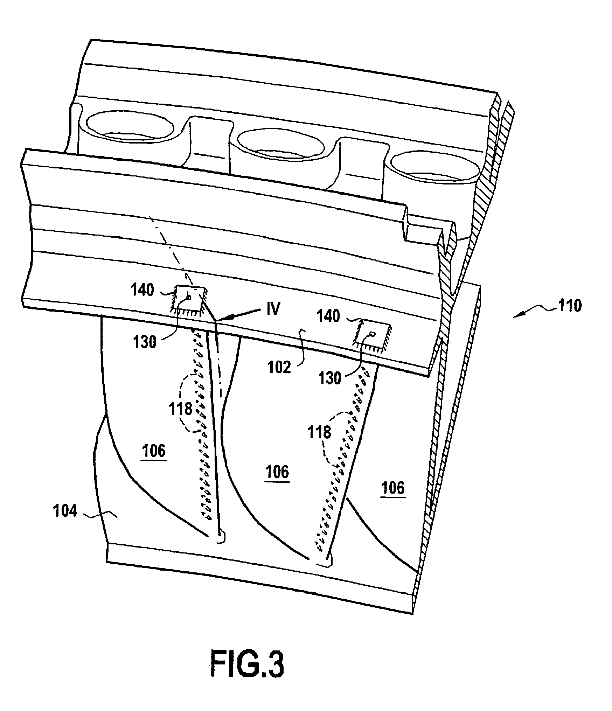

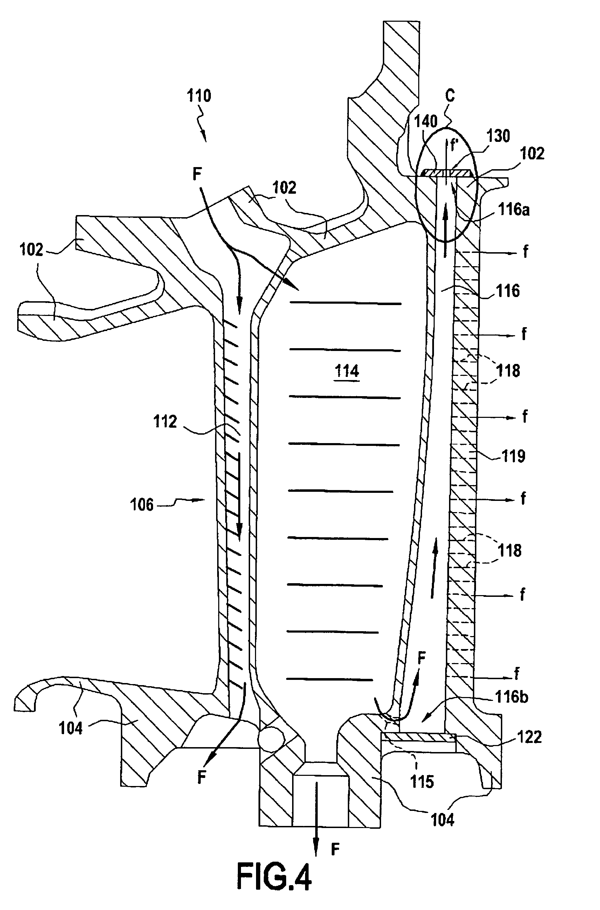

L'exemple de secteur 110 des figures 3 et 4 diffère du secteur 10 des figures 1 et 2 uniquement en ce qui concerne la zone de la cavité de bord de fuite située au niveau de la plate-forme extérieure. Aussi, les parties du secteur 110 analogues à celles du secteur 10 sont repérées par les mêmes références numériques augmentées de 100 et ne seront pas décrites une nouvelle fois.

Le secteur 110 est réalisé par fonderie et, à l'origine, la cavité de bord de fuite 116 présente une ouverture extérieure 116a au niveau de son extrémité extérieure, cette ouverture extérieure 116a traversant le segment 102 de plate-forme extérieure. L'ouverture extérieure 116a est utile pour permettre l'évacuation du noyau soluble utilisé pour ménager la cavité 116 à l'intérieur de l'aube 106, lors du moulage. En outre, la section de l'ouverture extérieure 116a est de taille suffisamment importante pour que le noyau présente, à cet endroit, une épaisseur suffisamment importante et ne risque pas de se rompre. Par exemple, la section de l'ouverture extérieure 116a a la forme générale d'un rectangle de 8 mm de long sur 2 mm de large, soit une surface de 16 mm².

Après moulage du secteur 110, on dépose sur celui-ci, par voie gazeuse, un revêtement protecteur protégeant contre la corrosion et l'oxydation. Ce revêtement protecteur est, par exemple, un revêtement d'aluminium. Le procédé de dépôt d'un revêtement d'aluminium est connu et a été décrit plus haut.

Conformément à l'invention, l'ouverture extérieure 116a de la cavité de bord de fuite n'est pas obturée : la cavité 116 communique avec un trou de sortie d'air 130 présent au niveau de la plate-forme extérieure 102. En fonctionnement, ce trou 130 permet l'évacuation d'une partie de l'air de refroidissement suivant la flèche f'. Ainsi, il existe une circulation d'air dans la zone C de la cavité 116, située au niveau du secteur de plate-forme extérieure 102. Cette circulation d'air de refroidissement permet de refroidir les parois de la cavité 116 dans la zone C et ces parois sont moins sujettes à la corrosion à chaud.

De plus, lors du dépôt, par voie gazeuse, du revêtement protecteur, une partie du gaz utilisé pour le dépôt passe par le trou 130 et un revêtement est déposé sur les parois de la cavité 116 situées dans la zone C. Ces parois sont ainsi protégées par le revêtement contre la corrosion.

La section d'ouverture du trou de sortie d'air 130 est suffisamment large pour permettre le passage d'une quantité suffisante de gaz lors du dépôt du revêtement protecteur et pour permettre à ce gaz de pénétrer suffisamment loin à l'intérieur de la cavité 116. D'un autre côté, cette section d'ouverture est suffisamment étroite pour que l'évacuation d'air de refroidissement (flèche f') ne soit pas trop importante en fonctionnement. Ainsi, par exemple, la section d'ouverture du trou 130 a la forme générale d'un cercle de 1,6 mm de diamètre, soit une surface d'environ 2 mm².

Le trou de sortie d'air 130 est ménagé au travers d'une plaque métallique 140. Cette plaque 140 est de forme rectangulaire ou carrée. Cette plaque 140 est fixée par brasage sur le segment 102 de la plate-forme extérieure. Cette plaque 140 est choisie en un matériau suffisamment dur et résistant aux températures élevées, pour que la surface de la section d'ouverture du trou 130 reste constante ou varie faiblement en fonctionnement.

## Revendications

1. Secteur de distributeur de turbine (110) comprenant un segment de plate-forme extérieure (102) et un segment de plate-forme intérieure (104) entre lesquels s'étendent une ou plusieurs aubes creuses (106), chaque aube présentant une cavité de bord de fuite (116) destinée à être alimentée en air de refroidissement et qui communique avec une pluralité d'évents (118) répartis le long du bord de fuite de l'aube, ces évents permettant l'évacuation d'une partie de l'air de refroidissement, **caractérisé en ce que** ladite cavité (116) présente une ouverture extérieure (116a) traversant le segment de plate-forme extérieure et communiquant avec un trou (130) de sortie d'air ménagé au travers d'une pièce recouvrant l'ouverture extérieure (116a) et fixée sur le segment de plate-forme extérieure (102), le trou (130) permettant l'évacuation d'une partie de l'air de refroidissement.

2. Secteur de distributeur de turbine selon la revendication 1, dans lequel le trou de sortie d'air (130) présente une section d'ouverture de surface supérieure ou égale à 2 mm².

3. Secteur de distributeur de turbine selon la revendication 1 ou 2, dans lequel le trou de sortie d'air (130) présente une section d'ouverture de surface inférieure ou égale à 8 mm².

4. Secteur de distributeur de turbine selon l'une quelconque des revendications 1 à 3, dans lequel ladite pièce est une plaque métallique (140) fixée par brasage sur le segment de plate-forme extérieure (102).

5. Procédé de fabrication, dans lequel : on fournit un secteur de distributeur de turbine (110) selon l'une quelconque des revendications précédentes ; et on dépose sur ce secteur, par voie gazeuse, un revêtement protecteur, de sorte qu'une partie du gaz utilisé pour le dépôt passe par le trou de sortie d'air (130) et que les parois de la cavité (106) situées à proximité de ce trou (130) sont recouvertes par le revêtement protecteur.

6. Procédé de fabrication selon la revendication 5, dans lequel le revêtement protecteur est un revêtement en aluminium.

7. Turbomachine comprenant au moins une turbine équipée d'un distributeur, dans laquelle le distributeur résulte de l'assemblage de plusieurs secteurs de distributeur (110) selon l'une quelconque des revendications 1 à 4.

8. Turbomachine selon la revendication 7, cette turbomachine étant un turboréacteur double corps comprenant une turbine haute pression et une turbine basse pression, ledit distributeur étant le premier distributeur de la turbine basse pression, dans le sens d'écoulement normal du flux d'air traversant cette turbine.

## Claims

1. A turbine nozzle sector (110) comprising an outer platform segment (102) and an inner platform segment (104) between which there extend one or more hollow vanes (106), each vane (106) presenting a trailing edge cavity (116) for feeding with cooling air and communicating with a plurality of vents (118) distributed along the trailing edge of the vane, these vents serving to exhaust a fraction of the cooling air, **characterized in that** said cavity (116) has an outer opening (116a) which passes through the outer platform segment (102) and communicates with an air outlet hole (130), the air outlet hole (130) passing through a part (140) that covers the outer opening (116a) and that is fastened on the outer platform segment (102), the hole (130) enabling a fraction of the cooling air to be exhausted.

2. A turbine nozzle sector according to claim 1, in which the air outlet hole (130) presents an outlet section of area greater than or equal to 2 mm².

3. A turbine nozzle sector according to claim 1 or 2, in which the air outlet hole (130) presents an outlet section of area less than or equal to 8 mm².

4. A turbine nozzle sector according to any one of claims 1 to 3, in which said part is a metal plate (140) fastened onto the outer platform segment (102) by brazing.

5. A fabrication method comprising the steps of:
providing a turbine nozzle sector (110) according to any one of the preceding claims; and using a gaseous technique to deposit on said sector a protective coating, such that a fraction of the gas used for deposition purposes passes through the air outlet hole (130) and the walls of the cavity (106) situated in the vicinity of the hole (130) are covered by the protective coating.

6. A fabrication method according to claim 5, in which the protective coating is a coating of aluminum.

7. A turbomachine including at least one turbine fitted with a nozzle, in which the nozzle is the result of assembling together a plurality of nozzle sectors (110) according to any one of claims 1 to 4.

8. A turbomachine according to claim 7, the turbomachine being a two-spool turbojet having a high-pressure turbine and a low pressure turbine, said nozzle being the nozzle of the low pressure turbine that is first nozzle in the normal flow direction of the stream of air passing through the turbine.

## Patentansprüche

1. Turbinenleitradsektor (110), umfassend ein Außenplattformsegment (102) und ein Innenplattformsegment (104), zwischen denen sich eine oder mehrere Hohlschaufeln (106) erstrecken, wobei jede Schaufel einen Austrittskantenhohlraum (116) aufweist, der dazu bestimmt ist, mit Kühlluft beaufschlagt zu werden, und der mit einer Vielzahl von entlang der Austrittskante der Schaufel verteilten Entlüftungsöffnungen (118) in Verbindung steht, wobei diese Entlüftungsöffnungen das Abführen eines Teils der Kühlluft ermöglichen, **dadurch gekennzeichnet, daß** der Hohlraum (116) eine äußere Öffnung (116a) aufweist, die das Außenplattformsegment durchquert und mit einem Luftaustrittsloch (130) in Verbindung steht, das durch ein Teil hindurch ausgebildet ist, welches die äußere Öffnung (116a) bedeckt und an dem Außenplattformsegment (102) befestigt ist, wobei das Loch (130) das Abführen eines Teils der Kühlluft ermöglicht.

2. Turbinenleitradsektor nach Anspruch 1, wobei das Luftaustrittsloch (130) einen Öffnungsquerschnitt mit einer Fläche von mehr als oder gleich 2 mm² aufweist.

3. Turbinenleitradsektor nach Anspruch 1 oder 2, wobei das Luftaustrittsloch (130) einen Öffnungsquerschnitt mit einer Fläche von weniger als oder gleich 8 mm² aufweist

4. Turbinenleitradsektor nach einem der Ansprüche 1 bis 3, wobei das Teil eine Metallplatte (140) ist, die an dem Außenplattformsegment (102) festgelötet ist.

5. Herstellungsverfahren, wobei: ein Turbinenleitradsektor (110) nach einem der vorhergehenden Ansprüche bereitgestellt wird und auf diesem Sektor eine Schutzbeschichtung aus der Gasphase abgeschieden wird, so daß ein Teil des für das Abscheiden verwendeten Gases durch das Luftaustrittsloch (130) tritt und daß die Wände des Hohlraums (106), die in der Nähe dieses Lochs (130) gelegen sind, mit der Schutzbeschichtung überzogen sind.

6. Herstellungsverfahren nach Anspruch 5, wobei die Schutzbeschichtung eine Aluminiumbeschichtung ist.

7. Turbomaschine, die wenigstens eine mit einem Leitrad ausgestattete Turbine umfaßt, wobei das Leitrad aus dem Zusammenfügen von mehreren Leitradsektoren (110) nach einem der Ansprüche 1 bis 4 hervorgeht.

8. Turbomaschine nach Anspruch 7, wobei diese Turbomaschine ein Zweiwellen-Turbostrahltriebwerk ist, das eine Hochdruckturbine und eine Niederdruckturbine umfaßt, wobei das Leitrad das erste Leitrad der Niederdruckturbine in der normalen Strömungsrichtung des diese Turbine durchströmenden Luftstroms ist.
